# FASCICULE DE BREVET EUROPEEN

(11) **EP 1 139 535 B1**
(45) Date de publication et mention de la délivrance du brevet: **02.09.2009**
(21) Numéro de dépôt: 01400518.5
(22) Date de dépôt: 28.02.2001
(51) Int. Cl.: H02G 3/06

(54) **Accessoire à rapporter sur un socle de goulotte de cheminement de conducteurs ou de câbles électriques.**
Zubehör für elektrischen Verkabelungskanalsockel
Accessory for an electrical wiring or cabling duct base

(30) Priorité: 24.03.2000 FR 0003787
(43) Date de publication de la demande: 04.10.2001
(73) Titulaire: Legrand France, 87000 Limoges (FR); Legrand SNC, 87000 Limoges (FR)
(72) Inventeur: Bellanger, Jérôme, 72000 Le Mans (FR)
(74) Mandataire: Santarelli

(56) Documents cités:
- EP-A- 0 414 616
- EP-A- 0 734 107
- DE-U- 8 904 318

## Description

La présente invention concerne de manière générale des accessoires à rapporter sur un socle de goulotte de cheminement de conducteurs ou de câbles électriques, et en particulier des accessoires dits de finition assurant une continuité de la protection des câbles lors des interruptions des tronçons de couvercle de fermeture de la goulotte, que ce soit au niveau du montage d'un appareillage, en bout de goulotte, ou à la formation d'un angle.

Plus particulièrement, l'invention concerne un accessoire à rapporter sur un socle d'une goulotte de cheminement de conducteurs ou de câbles électriques comprenant un joint pour masquer, à l'intérieur de la goulotte, un éventuel intervalle situé au-delà, suivant la direction longitudinale, d'un bord d'au moins un tronçon de couvercle.

On connaît déjà, notamment du brevet français No 89 11267 publié sous le No 2 651 387, appartenant à la demanderesse, un accessoire de ce type, dont le joint est une paroi plane apte à être positionnée sous les tronçons de couvercle adjacents, pour fermer le jeu pouvant apparaître entre les bords coupés desdits tronçons de couvercle, lorsque la coupe de ces tronçons de couvercle n'est pas réalisée de manière parfaite.

Ainsi, un tel joint permet d'empêcher le passage de tout objet entre les deux tronçons de couvercle et assure une continuité d'isolation de telle sorte que la goulotte reste conforme aux normes en vigueur.

Si un tel joint donne entièrement satisfaction, notamment en ce qui concerne la conformité de la goulotte aux normes en vigueur, et également en termes de rapidité de pose pour les installateurs de goulottes qui privilégient ce paramètre, il ne convient pas toujours sur le plan esthétique, notamment lorsque la goulotte présente une largeur importante.

En effet, dans ce cas, les tronçons de couvercle de fermeture présentent également une largeur importante et leur coupe est d'autant plus délicate qu'elle peut conduire à un biaisage du bord de coupe plus important.

Ainsi, le jeu apparaissant entre les tronçons de couvercle juxtaposés peut être relativement conséquent laissant apparaître clairement le joint, ce qui confère à la goulotte un aspect final peu esthétique.

Afin de pallier à cet inconvénient précité, il a été proposé, plus particulièrement pour des goulottes de grande largeur, d'associer au joint un contre-joint recouvrant ledit joint ainsi que le bord coupé du ou des tronçons de couvercle, celui-ci pouvant alors être coupé sans soin particulier.

Pour la mise en place sans grande difficulté du contre-joint, on peut utiliser un support de contre-joint qui comporte, généralement, à chacune de ses extrémités devant être recouvertes par un tronçon de couvercle, un décrochement sur toute sa largeur contre lequel le tronçon de couvercle vient en butée.

Un tel support est notamment décrit dans la demande de brevet français No 97 15282 publiée sous le No 2 772 200, appartenant à la demanderesse.

Une telle solution donne satisfaction sur le plan de la conformité de l'ensemble aux normes en vigueur, et sur le plan esthétique, lorsque le contre-joint reproduit l'aspect externe et le coloris du couvercle de la goulotte.

Le brevet européen EP 0 630 090 divulgue également la prise en sandwich de deux tronçons de couvercle successifs entre, du côté intérieur, un joint, et, du côté extérieur, un contre-joint, le joint comportant une portion se plaçant au niveau entre les deux tronçons de couvercle.

L'accessoire décrit dans ce brevet européen EP 0 630 090 est complexe dans sa réalisation et sa mise en oeuvre et présente, comme principal inconvénient, le fait que la saillie peu esthétique de son contre-joint rebute une partie des installateurs qui continuent à préférer une pose sans accessoire, et non conforme aux normes en vigueur.

En outre, lorsque le couvercle de la goulotte présente un motif décoratif réalisé lors de son extrusion ou en reprise, par exemple par la pose d'un revêtement imitant diverses textures, telles que celle du bois, de la pierre ou autre, la présence d'un contre-joint injecté à l'interruption du couvercle, même s'il est d'un coloris coordonné à celui du décor du couvercle, n'est pas toujours du goût de l'installateur, qui préférera réaliser une pose jointive des tronçons de couvercle coupés à la longueur adéquate avec soin.

Par rapport à l'état de la technique précitée, la présente invention propose un nouvel accessoire à rapporter sur un socle de goulotte de cheminement de conducteurs ou de câbles électriques, simple de réalisation, peu coûteux, et qui donne à l'installateur un repère de positionnement des bords coupés de tronçons de couvercle ou d'autres éléments à juxtaposer suivant la longueur dudit socle, en lui permettant de recouvrir ou non, à l'aide d'un contre-joint, les bords coupés, selon le soin qu'il désire apporter à la réalisation de la coupe desdits tronçons de couvercle ou autres éléments, et selon l'esthétique souhaitée pour l'ensemble de l'installation.

Plus particulièrement, selon l'invention, l'accessoire à rapporter sur un socle d'une goulotte de cheminement de conducteurs ou de câbles électriques, comprend un joint pour masquer, à l'intérieur de la goulotte, un éventuel intervalle situé au-delà, suivant la direction longitudinale, d'un bord d'au moins un tronçon de couvercle, ledit joint comportant une paroi élastiquement déformable apte à prendre par déformation élastique deux configurations, une première configuration, dans laquelle au moins une partie de ladite paroi est située au niveau du couvercle, et une deuxième configuration, dans laquelle ladite paroi est située à un niveau inférieur à celui du couvercle.

Ainsi, avantageusement, grâce à l'invention, lors d'une interruption du couvercle de fermeture de la goulotte qui amène un installateur à couper ce couvercle en tronçons, lorsque celui-ci souhaite installer un contre-joint, il utilise la paroi formant le joint dans sa première configuration, et plus particulièrement la partie de cette paroi située au niveau du couvercle, pour mesurer la longueur adéquate des tronçons de couvercle à couper de façon à ce que les bords coupés des tronçons de couvercle viennent, lors du montage de ces derniers sur le socle de la goulotte, se positionner contre cette partie de paroi formant le joint, en laissant subsister entre eux au maximum un intervalle réduit à la largeur de cette paroi formant le joint. Puis en positionnant le contre-joint sur la paroi formant le joint, il déforme élastiquement ladite paroi pour la positionner dans sa deuxième configuration dans laquelle elle s'efface sous le contre-joint et se place à un niveau inférieur à celui du couvercle, plus précisément à un niveau compris entre le couvercle et le socle de la goulotte.

Si l'installateur ne souhaite pas utiliser un contre-joint, il peut toutefois utiliser le joint de l'accessoire conforme à l'invention, celui-ci s'effaçant sous les deux tronçons de couvercle rapprochés, en se déformant élastiquement pour passer de sa première configuration à sa deuxième configuration, comme cela est explicité ci-dessus.

D'autres caractéristiques avantageuses et non limitatives de l'accessoire conforme à l'invention sont énoncées ci-après.

L'accessoire selon l'invention étant associé à un tronçon de couvercle de forme galbée, ladite paroi formant le joint présente, dans sa première configuration, une forme plane, et, dans sa deuxième configuration, une forme galbée épousant celle du tronçon de couvercle auquel elle est associée.

L'accessoire selon l'invention étant associé à un tronçon de couvercle de forme essentiellement plane, ladite paroi formant le joint présente, dans sa première configuration, une forme galbée, et, dans sa deuxième configuration, une forme essentiellement plane épousant celle du tronçon de couvercle auquel elle est associée.

La paroi formant le joint porte sur sa face interne tournée vers le fond du socle de la goulotte, des moyens pour s'accrocher à une extrémité d'une cloison dudit socle. Ces moyens d'accrochage peuvent être des moyens d'encliquetage constitués préférentiellement de deux languettes en vis-à-vis faisant saillie de ladite face interne de la paroi formant le joint, et inclinées par rapport à celle-ci.

L'accessoire comporte un contre-joint destiné à recouvrir ladite paroi formant le joint ainsi qu'un bord du tronçon de couvercle et un bord d'un autre élément, lesdits bords étant positionnés de part et d'autre de ladite paroi de manière adjacente à cette dernière, pour former une continuité de paroi externe entre le tronçon de couvercle et ledit élément.

Selon ce mode de réalisation, la paroi formant le joint présente, dans sa deuxième configuration, une longueur inférieure à celle du contre-joint, de telle sorte qu'elle laisse dégagées les deux extrémités du contre-joint portant des pattes d'encliquetage dans des moyens de rainure prévus sur ledit socle.

Le contre-joint épouse avantageusement la forme du tronçon de couvercle auquel il est associé.

La paroi formant le joint s'étend sur la majeure partie de la largeur du socle de la goulotte.

La paroi formant le joint est réalisée en matière plastique moulée.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en bout d'un accessoire conforme à l'invention, positionné sur un socle de goulotte, la paroi formant le joint dudit accessoire étant placée dans sa première configuration ;
- la figure 2 est une vue de dessus en perspective de la figure 1 avec positionné au-dessus de la paroi formant le joint de l'accessoire selon l'invention le contre-joint associé ;
- la figure 3 est une vue en bout de l'accessoire représenté sur la figure 2 avec le contre-joint mis en place sur le socle de la goulotte ;
- la figure 4 est une vue de dessous de la paroi formant le joint de l'accessoire conforme à l'invention, et
- la figure 5 est une vue de dessous du contre-joint associé à la paroi formant joint représentée sur la figure 4.

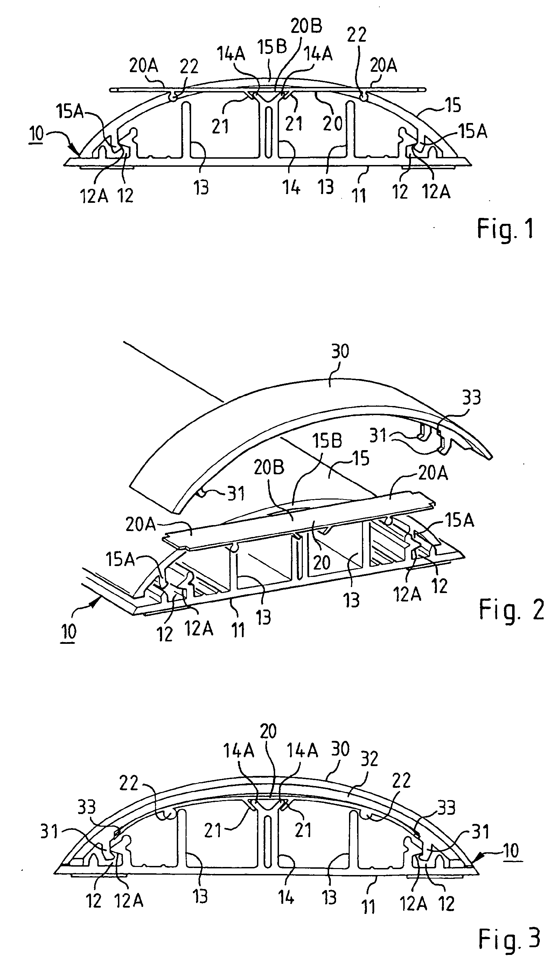

Sur les figures 1 à 3, on a représenté une goulotte 10 de cheminement de câbles électriques non représentés.

Une telle goulotte connue en soi sert de support, de logement et de protection de divers appareillages, notamment de divers appareillages électriques, ainsi que le logement des conducteurs pour la desserte électrique de ces appareillages.

Elle comporte, de manière usuelle, un socle 11, ici essentiellement droit, pourvu intérieurement de plusieurs compartiments ou canalisations pour le logement desdits câbles électriques et le montage de différents appareillages ou supports d'appareillages électriques.

Ici, le socle 11 comprend une cloison centrale longitudinale 14 qui le sépare en deux parties égales et, de part et d'autre de cette cloison centrale 14, deux cloisons latérales 13 s'étendant parallèlement à ladite cloison centrale 14. Entre la cloison centrale 14 et chacune desdites cloisons latérales 13, il est défini un compartiment de cheminement de câbles ou de conducteurs électriques.

En outre, à proximité de ses bords longitudinaux le socle 11 de la goulotte 10 comprend des moyens de rainure 12 destinés à accueillir des pattes d'encliquetage 15A d'un tronçon de couvercle 15 fermant ladite goulotte 10.

Plus précisément, ces pattes d'encliquetage 15A du tronçon de couvercle 15 s'accrochent sur une paroi 12A des moyens de rainure 12 prévus sur le socle 11 de la goulotte 10.

Ici, le tronçon de couvercle 15 présente un profil courbe ou galbé épousant la courbe enveloppe des sommets des différentes cloisons 13, 14 portées par le socle 11 de la goulotte 10.

Bien entendu, selon une variante non représentée, on pourrait prévoir que le couvercle de fermeture présente un profil droit ou plan épousant la courbe enveloppe de forme plane des sommets des différentes cloisons portées par le socle de la goulotte.

Comme le montrent les figures 1 à 3, à l'interruption du tronçon de couvercle 15, il est prévu un accessoire dit accessoire de finition qui est ici un joint rapporté sur le socle 11 de la goulotte 10, de façon à établir une continuité de protection de câbles ou conducteurs électriques entre ledit tronçon de couvercle 15, et éventuellement un autre tronçon de couvercle non représenté ou un autre élément, tel qu'un embout d'extrémité de la goulotte ou un support d'appareillage électrique.

Cet accessoire permet de masquer, à l'intérieur de la goulotte 10, un éventuel intervalle situé au-delà, suivant la direction longitudinale, du bord 15B du tronçon de couvercle 15.

Cet accessoire comporte avantageusement une paroi 20 élastiquement déformable, ici s'étendant sur la majeure partie de la largeur du socle 11 de la goulotte 10, cette paroi 20 étant apte à prendre par déformation élastique deux configurations, une première configuration représentée sur les figures 1 et 2, dans laquelle au moins une partie 20A de ladite paroi 20 est située au niveau du couvercle 15, et une deuxième configuration représentée sur la figure 3, dans laquelle ladite paroi 20 est située à un niveau inférieur à celui du couvercle 15.

Ici, l'accessoire étant associé à un couvercle de forme galbée, ladite paroi 20 formant le joint présente, dans sa première configuration, une forme plane (voir figures 1, 2 et 4), et, dans sa deuxième configuration, une formée galbée épousant celle du couvercle 15 auquel elle est associé (voir figure 3).

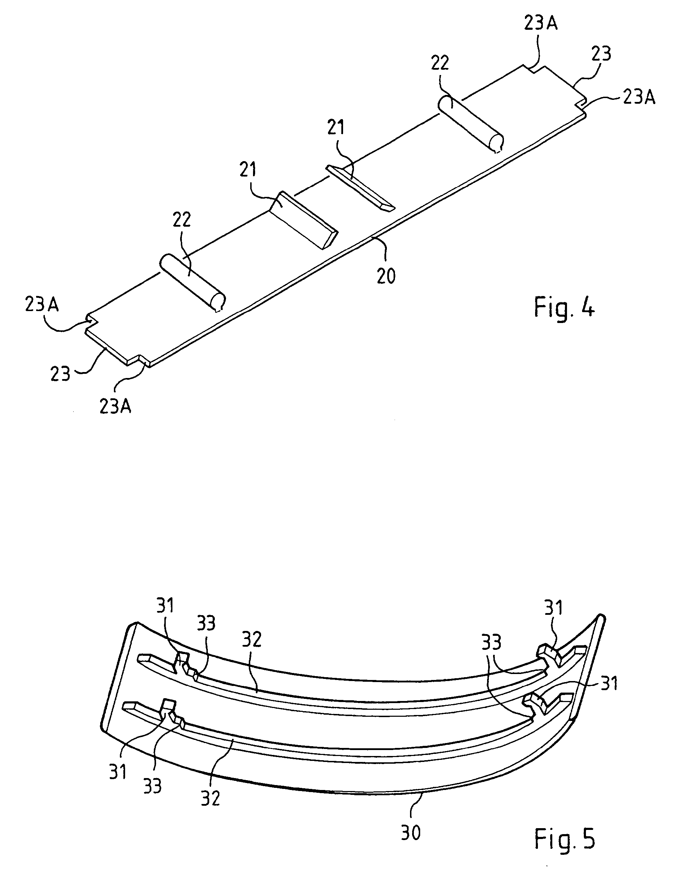

Plus particulièrement, cette paroi 20 présente, dans sa première configuration, une forme essentiellement rectangulaire avec à chaque extrémité un profil en podium 23 comportant de part et d'autre de la marche haute du podium 23 des décrochements 23A (voir figure 4).

Comme le montrent les figures 1 et 2, dans sa première configuration, la paroi 20 présente une partie centrale 20B située en dessous du couvercle 15, et deux parties d'extrémité 20A situées au niveau du couvercle 15. Les deux parties d'extrémité 20A s'étendent de part et d'autre de ladite partie centrale 20B de ladite paroi. Chacune desdites parties d'extrémité 20A représente environ plus d'un tiers en longueur de ladite paroi 20 de telle sorte que cette paroi 20 est, dans sa première configuration, majoritairement située au niveau du couvercle 15.

En outre, cette paroi 20 formant le joint porte sur sa face interne tournée vers le fond du socle 11 de la goulotte des moyens pour s'accrocher à l'extrémité de la cloison centrale 14 prévue sur ledit socle 11.

Ces moyens d'accrochage sont des moyens d'encliquetage comprenant avantageusement deux languettes 21 en vis-à-vis, faisant saillie de ladite face interne de la paroi 20, et étant inclinées par rapport à cette dernière.

Ces languettes 21 sont destinées à coopérer avec les extrémités complémentaires 14A de la cloison centrale 14 du socle 11 de la goulotte (voir figure 1).

En outre, de part et d'autre des languettes 21, la paroi 20 porte sur sa face interne deux bourrelets 22 s'étendant sur la largeur de ladite paroi 20 et destinés à venir se positionner contre les cloisons 13 portées par le socle 11 de la goulotte 10, lorsque ladite paroi 20 prend sa deuxième configuration galbée (voir figure 3). L'appui des bourrelets 22 de la paroi 20 contre les cloisons 13 du socle 11 de la goulotte 10, permet de limiter la déformation de ladite paroi 20 de manière qu'elle reste une déformation élastique.

Cette paroi 20 formant le joint est réalisée préférentiellement en matière plastique moulée. Il est avantageusement tiré parti des bourrelets 22 pour favoriser l'éjection de ladite paroi du moule de fabrication.

Par ailleurs, l'accessoire représenté sur les figures 2 et 3 comporte un contre-joint 30 destiné à recouvrir ladite paroi 20 formant le joint ainsi que le bord 15B du tronçon de couvercle 15 et un bord d'un autre élément non représenté, lesdits bords étant positionnés de part et d'autre dudit joint, pour former une continuité de paroi externe entre le tronçon de couvercle et ledit élément.

L'autre élément peut être constitué par un autre tronçon de couvercle de fermeture de la goulotte, ou un embout d'extrémité de ladite goulotte ou encore un support d'appareillage électrique.

Ici, le contre-joint 30 présente une forme galbée épousant celle du tronçon de couvercle 15.

Sur sa face interne tournée vers le socle 11 de la goulotte, le contre-joint 30 comporte, à proximité de chacune de ses extrémités, deux pattes d'encliquetage 31 destinées à coopérer avec les moyens de rainure 12 prévus sur le socle 11 de la goulotte, pour permettre la fixation du contre-joint 30 sur le socle de la goulotte.

Les pattes d'encliquetage 31 du contre-joint 30 sont portées par des nervures 32 s'étendant en parallèle d'une extrémité à l'autre du contre-joint sur la majeure partie de sa longueur, et conférant à celui-ci une certaine rigidité (voir figure 5).

Comme le montre plus particulièrement la figure 3, la paroi 20 formant le joint présente, dans sa deuxième configuration, une forme épousant celle du couvercle et une longueur inférieure à celle du contre-joint 30, de telle sorte qu'elle laisse dégagées les extrémités du contre-joint 30 portant les pattes d'encliquetage 31 pour que celles-ci puissent s'engager librement dans les moyens de rainure 12 prévus sur le socle 11 de la goulotte 10.

Il est à noter que chaque décrochement 23A prévu à chaque extrémité de la paroi 20 formant le joint, coopère avec un décrochement complémentaire 33 prévu à la base de chaque patte d'encliquetage 31 du contre-joint, de façon à caler la paroi 20 formant le joint contre le contre-joint 30 et éviter tout flottement de ladite paroi dans la goulotte fermée.

Le contre-joint 30 est également réalisé avantageusement en matière plastique moulée. Il présente un aspect externe accordé à celui du couvercle de fermeture de la goulotte.

Ainsi, avantageusement, lors d'une interruption du couvercle de fermeture de la goulotte 10 qui amène un installateur à couper ce couvercle en tronçons 15, et lorsque celui-ci souhaite installer un contre-joint 30, il utilise le bord de la paroi 20 formant le joint, positionnée dans sa première configuration sur le socle 11 de la goulotte 10, pour mesurer la longueur adéquate des tronçons de couvercle à couper de façon à ce que les bords coupés 15B des tronçons de couvercle 15 viennent, lors du montage de ces derniers sur le socle de la goulotte, se positionner contre ladite paroi 20 en laissant subsister entre eux au maximum un intervalle réduit à la largeur de cette paroi.

Puis l'installateur positionne le contre-joint 30 sur cette paroi 20 afin de la déformer élastiquement. Ladite paroi 20 s'efface sous le contre-joint 30 en laissant dégagées les extrémités du contre-joint 30 portant les pattes d'encliquetage 31, pour permettre l'encliquetage du contre-joint sur le socle de la goulotte. Dans cette deuxième configuration, la paroi 20 est située en dessous du couvercle.

Si l'installateur ne souhaite pas utiliser de contre-joint, il peut toutefois utiliser la paroi 20 formant le joint et découper les tronçons de couvercle à la longueur adéquate de sorte qu'une fois positionnés sur le socle de la goulotte ils viennent bord à bord. Lors de la mise en place des tronçons de couvercle, la paroi 20 s'efface sous ceux-ci en se déformant élastiquement pour épouser la forme desdits tronçons de couvercle.

Cette paroi 20 formant le joint permet d'assurer une sécurité, dans le sens où elle permet d'éviter l'accès aux câbles ou conducteurs électriques à l'interruption des deux tronçons de couvercle mis bord à bord.

En particulier, on pourrait prévoir, selon un autre mode de réalisation non représenté, que la paroi formant le joint présente, dans sa première configuration, une forme galbée, et, dans sa deuxième configuration, une forme essentiellement plane épousant celle du couvercle auquel elle associée.

## Revendications

1. Accessoire à rapporter sur un socle (11) d'une goulotte (10) de cheminement de conducteurs ou de câbles électriques, comprenant un joint pour masquer, à l'intérieur de la goulotte (10), un éventuel intervalle situé au-delà, suivant la direction longitudinale, d'un bord (15B) d'au moins un tronçon de couvercle (15), **caractérisé en ce que** le joint comporte une paroi (20) élastiquement déformable apte à prendre par déformation élastique deux configurations, une première configuration, dans laquelle au moins une partie (20A) de ladite paroi (20) est située au niveau du couvercle (15), et une deuxième configuration, dans laquelle ladite paroi (20) est située à un niveau inférieur à celui du couvercle (15).

2. Accessoire selon la revendication 1, associé à un couvercle de forme galbée, **caractérisé en ce que** ladite paroi (20) formant le joint présente, dans sa première configuration; une forme plane, et, dans sa deuxième configuration, une forme galbée épousant celle du couvercle (15) auquel elle est associée.

3. Accessoire selon la revendication 1, associé à un couvercle de forme essentiellement plane, **caractérisé en ce que** ladite paroi (20) formant le joint présente, dans sa première configuration, une forme galbée, et, dans sa deuxième configuration, une forme essentiellement plane épousant celle du couvercle auquel elle est associée.

4. Accessoire selon l'une des revendications 1 à 3, **caractérisé en ce que** ladite paroi (20) formant le joint porte sur sa face interne tournée vers le fond du socle (11) de la goulotte (10), des moyens (21) pour s'accrocher à une extrémité d'une cloison (14) dudit socle (11).

5. Accessoire selon la revendication 4, **caractérisé en ce que** lesdits moyens d'accrochage sont des moyens d'encliquetage (21).

6. Accessoire selon la revendication 5, **caractérisé en ce que** lesdits moyens d'encliquetage comprennent deux languettes (21) en vis-à-vis faisant saillie de ladite face interne de la paroi (20) formant le joint, et inclinées par rapport à cette dernière.

7. Accessoire selon l'une des revendications 1 à 6, **caractérisé en ce qu'**il comporte un contre-joint (30) destiné à recouvrir ladite paroi (20) formant le joint ainsi que le bord du tronçon de couvercle (15) et un bord d'un autre élément, lesdits bords étant positionnés de part et d'autre dudit joint, pour former une continuité de paroi externe entre le tronçon de couvercle et ledit élément.

8. Accessoire selon la revendication 7, **caractérisé en ce que** la paroi (20) formant le joint présente, dans sa deuxième configuration, une longueur inférieure à celle du contre-joint (30), de telle sorte qu'elle laisse dégagées les extrémités du contre-joint (30) portant des pattes d'encliquetage (31) dans des moyens de rainure (12) prévus sur le socle (11) de la goulotte (10).

9. Accessoire selon l'une des revendications 7 ou 8, **caractérisé en ce** le contre-joint (30) présente une forme épousant celle du tronçon de couvercle (15).

10. Accessoire selon l'une quelconque des revendications précédentes, **caractérisé en ce que** la paroi (20) formant le joint s'étend sur une majeure partie de la largeur du socle (11) de la goulotte (10).

11. Accessoire selon l'une quelconque des revendications précédentes, **caractérisé en ce que** la paroi (20) formant le joint est réalisée en matière plastique moulée.

## Claims

1. Accessory for attaching to a base section (11) of trunking (10) for routing electrical cables or conductors, said accessory including a joint inside the trunking (10) for masking any longitudinal gap beyond an edge (15B) of at least one length of cover section (15), **characterised in that** the joint includes an elastically deformable wall (20) adapted to deform elastically between a first configuration in which at least a portion (20A) of said wall (20) is at the same level as the cover section (15) and a second configuration in which said wall (20) is at a lower level than the cover section (15).

2. Accessory according to claim 1 when associated with a cover section of bulging shape, **characterised in that** said wall (20) forming the joint has a plane shape in its first configuration and a bulging shape in its second configuration espousing that of the associated cover section (15).

3. Accessory according to claim 1 when associated with a cover section of essentially plane shape, **characterised in that** said wall (20) forming the joint has a bulging shape in its first configuration and an essentially plane shape in its second configuration espousing that of the associated cover section.

4. Accessory according to any of claims 1 to 3, **characterised in that** said wall (20) forming the joint carries on an inside face, which faces towards the back of the base section (11) of the trunking (10), means (21) for hooking it onto an edge of a partition (14) of said base section (11).

5. Accessory according to claim 4, **characterised in that** said attachment means are in the form of clipping means (21).

6. Accessory according to claim 5, **characterised in that** said clipping means include two facing tongues (21) projecting from said inside face of the wall (20) forming the joint and inclined thereto.

7. Accessory according to any of claims 1 to 6, **characterised in that** it includes a joint-cover (30) adapted to cover said wall (20) forming the joint and the edge of the length of cover section (15) and an edge of another member, said edges being positioned on either side of said joint to form a continuous outside wall between the length of cover section and said member.

8. Accessory according to claim 7, **characterised in that** the wall (20) forming the joint in its second configuration is shorter than the joint-cover (30) so that it leaves uncovered the ends of the joint-cover (30) which carry clips (31) which clip into groove means (12) provided on the base section (11) of the trunking (10).

9. Accessory according to claim 7 or 8, **characterised in that** the joint-cover (30) has a shape espousing that of the length of cover section (15).

10. Accessory according to any preceding claim, **characterised in that** the wall (20) forming the joint extends over a greater part of the width of the base section (11) of the trunking (10).

11. Accessory according to any preceding claim, **characterised in that** the wall (20) forming the joint is moulded from a plastics material.

## Patentansprüche

1. Zubehör zum Aufsetzen auf einen Sockel (11) eines Installationskanals (10) zum Führen von elektrischen Leitungen oder Kabeln, mit einer Verbindung zum Verdecken eines eventuellen Zwischenraums innen im Installationskanal, der in Längsrichtung jenseits eines Rands (15B) wenigstens eines Deckelabschnitts (15) liegt,
**dadurch gekennzeichnet, dass** die Verbindung eine elastisch verformbare Wand (20) aufweist, die durch elastische Verformung zwei Ausgestaltungen anzunehmen vermag, nämlich eine erste Ausgestaltung, in der wenigstens ein Teil (20A) der Wand (20) in Höhe des Deckels (15) liegt, und eine zweite Ausgestaltung, in der die Wand (20) tiefer als der Deckel (15) liegt.

2. Zubehör nach Anspruch 1, das einem gewölbtem Deckel zugeordnet ist,
**dadurch gekennzeichnet, dass** die die Verbindung bildende Wand (20) in ihrer ersten Ausgestaltung eine ebene Form aufweist und in ihrer zweiten Ausgestaltung eine gewölbte Form, die sich der des Deckels (15), dem sie zugeordnet ist, anpasst.

3. Zubehör nach Anspruch 1, das einem im Wesentlichen ebenen Deckel zugeordnet ist,
**dadurch gekennzeichnet, dass** die die Verbindung bildende Wand (20) in ihrer ersten Ausgestaltung eine gewölbte Form aufweist und in ihrer zweiten Ausgestaltung eine im Wesentlichen ebene Form, die sich der des Deckels, dem sie zugeordnet ist, anpasst.

4. Zubehör nach einem der Ansprüche 1 bis 3,
**dadurch gekennzeichnet, dass** die die Verbindung bildende Wand (20) an ihrer zum Boden des Sockels (11) des Installationskanals (10) gewandten Innenseite Mittel (21) trägt, um sich an einem Ende einer Trennwand (14) des Sockels (11) einzuhaken.

5. Zubehör nach Anspruch 4,
**dadurch gekennzeichnet, dass** die Einhakmittel Rastmittel (21) sind.

6. Zubehör nach Anspruch 5,
**dadurch gekennzeichnet, dass** die Rastmittel zwei sich gegenüberliegende Arme (21) aufweisen, die an der Innenseite der die Verbindung bildenden Wand (20) vorstehen und bezüglich dieser schräg verlaufen.

7. Zubehör nach einem der Ansprüche 1 bis 6,
**dadurch gekennzeichnet, dass** es eine Deckleiste (30) umfasst, die zum Verdecken der die Verbindung bildenden Wand (20) sowie des Rand des Deckelabschnitts (15) und eines Rands eines anderen Elements bestimmt ist, wobei die Ränder beidseits der Verbindung angeordnet sind, um zwischen dem Deckelabschnitt und dem Element einen kontinuierlichen Verlauf der Außenwand zu bilden.

8. Zubehör nach Anspruch 7,
**dadurch gekennzeichnet, dass** die die Verbindung bildende Wand (20) in ihrer zweiten Ausgestaltung eine Länge aufweist, die geringer ist als die der Deckleiste (30), so dass sie die Enden der Deckleiste (30) frei lässt, welche Rastlaschen (31) zum Einrasten in die am Sockel (11) des Installationskanals (10) vorgesehenen Nutmittel (12) trägt.

9. Zubehör nach einem der Ansprüche 7 oder 8,
**dadurch gekennzeichnet, dass** die Deckleiste (30) eine Form aufweist, die sich der des Deckelabschnitts (15) anpasst.

10. Zubehör nach einem der vorhergehenden Ansprüche,
**dadurch gekennzeichnet, dass** sich die die Verbindung bildende Wand (20) über den größten Teil der Breite des Sockels (11) des Installationskanals (10) erstreckt.

11. Zubehör nach einem der vorhergehenden Ansprüche,
**dadurch gekennzeichnet, dass** die die Verbindung bildende Wand (20) aus einem formgegossenen Kunststoff ausgeführt ist.
